# EUROPEAN PATENT APPLICATION

(11) **EP 2 031 859 A1**
(43) Date of publication of application: **04.03.2009**
(21) Application number: 07115014.8
(22) Date of filing: 27.08.2007
(51) Int. Cl.: H04N 3/36

(54) **Film scanner**

(71) Applicant: Thomson Systems Germany GmbH, 64331 Weiterstadt (DE)
(72) Inventor: Loew, Andreas, 64521 Gross-Gerau (DE)
(74) Representative: Lindemann, Robert

(57) **Abstract**

A film scanner comprises a film support (3), driving means for moving a film (1) across said support (3) in a longitudinal direction, a photo-sensitive gate (5) for scanning images (2) of said film (1) placed on said support (3), a lateral abutment (9) and urging means (6, 15; 24, 25) for urging the film (1) against said abutment (9) in a transversal direction, characterized in that the abutment is formed by sprockets (9) of at least one sprocket wheel (8, 11) engaging perforation holes (4) of the film (1).

## Description

Film scanners are conventionally used in television and movie studios for converting a film recorded on celluloid into a stream of electronic data. Such a film scanner comprises a film support, driving means for moving a film to be scanned across the support in a longitudinal direction, and a photo-sensitive gate for scanning the images of the film placed on the support. For stabilizing the position of the film in a direction transversal to its transport direction while the film is transported across the support in a scanning process, it is known to provide a lateral abutment and means for urging an edge of the film against the abutment.

If the edge of the film is rough, it will not slide stably along the abutment, but will jitter in the transversal direction. Further, the interaction of the rough edge of the film with the abutment causes the tension of the film to fluctuate, so that longitudinal oscillations of the film, i.e. oscillations in the direction of film transport, may be caused. If such oscillations occur, the location of the images in the scan data appears fluctuating, and/or distortions seem to propagate the image plane, an effect known in the art as "watering".

In order to reduce the susceptibility of a film scanner to watering, it has been proposed to use no lateral abutment whatsoever. In that case, the position of the film is likely to fluctuate in the transversal direction, but longitudinal oscillations would not be excited. The transversal fluctuations might then be compensated by spatial filtering. This approach was found not satisfying, on the one hand because of problems in measuring accurately the lateral drift of the film and, on the other hand, because spatial filtering causes a significant loss of image sharpness.

The object of the present invention is therefore to provide a film scanner having a reduced susceptibility to watering.

This object is achieved by a film scanner comprising a film support, driving means for moving a film across said support in a longitudinal direction, a photo-sensitive gate for scanning images of the film placed on said support, a lateral abutment and urging means for urging the film against that abutment in a transversal direction, in which the abutment is formed by sprockets of at least one sprocket wheel engaging perforation holes of the film.

The effect of this measure is twofold. On the one hand, the position of at least some of the perforation holes of the film is closely related to the position of images thereon, since when a film is exposed in a camera, the camera conventionally uses those perforation holes (and not a lateral edge of the film) as a reference for placing the images on the film. On the other hand, since the sprockets move along with the film during scanning, high frequency transversal jitter of the film is substantially reduced when compared to a conventional film scanner having a stationary abutment.

As a further measure to reduce watering, the film scanner preferably comprises pressing means for pressing the film against a circumferential surface of the sprocket wheel from which the sprockets protrude. Since the sprockets generally have a pointed shape in order to engage easily the perforation holes of the film, placing precision of the film is increased if all sprockets engage the perforation holes to the same depth, i.e. the cross section of each sprocket extending through a perforation hole of the film, measured in the plane of the film, is the same for all sprockets.

The pressing means may e.g. comprise a nozzle for directing a gas jet onto the film. According to an alternative embodiment, they may comprise a pressing wheel having a circumferential surface which faces the circumferential surface of the sprocket wheel.

In order to minimize any longitudinal vibrations of the film while scanning, sprockets of a same sprocket wheel may engage the film simultaneously at an upstream side and a downstream side of the gate.

According to another embodiment, there are at least two sprocket wheels, of which one is placed at an upstream side of the gate and the other is placed at a downstream side of the gate.

If the distance between sprockets on said sprocket wheel (or wheels) is the same as the distance between images on the film, it is possible to place a film on the film scanner so that each sprocket wheel only engages those perforation holes of the film which actually served as a reference for the camera when the film was exposed. It is easily understood that in that way the film can be placed on the film support with higher precision, so that watering is minimized even further.

In order to keep at least one sprocket of the sprocket wheel engaged in the film at any time, a span of the circumferential surface of the sprocket wheel which is in contact with the film should be at least as long as one image of the film.

For urging the film against the sprockets, a pulley may be provided which presses against an edge of the film.

According to an alternative embodiment, the urging means may comprise a roll which presses the film against the support and is rotatable around an axis which is parallel to the plane of the film and non-perpendicular to the direction of propagation of the film.

The scanning operation of the gate is preferably synchronized with the rotation of the sprocket wheel. To this effect, the means for synchronizing may comprise a sensor for detecting the presence of a sprocket at a given location. According to a preferred embodiment, such a sensor comprises a beam source and a detector for detecting a fraction of the beam from said beam source which is scattered or reflected by the sprocket at said given location.

Further features and advantages of the invention will become apparent from the subsequent description of embodiments thereof referring to the appended drawings.
- Fig. 1: is a schematic horizontal cross section of part of a film scanner according to a first embodiment of the present invention;
- Fig. 2: is a schematic vertical cross section of the film scanner of Fig. 1;
- Fig. 3: is a horizontal cross section of the film scanner according to second embodiment;
- Fig. 4: is a vertical cross section of the scanner of Fig. 3;
- Fig. 5: is a vertical cross section of the scanner according to a third embodiment of the invention; and
- Fig. 6: is a schematic plan view of the scanner according to a fourth embodiment.

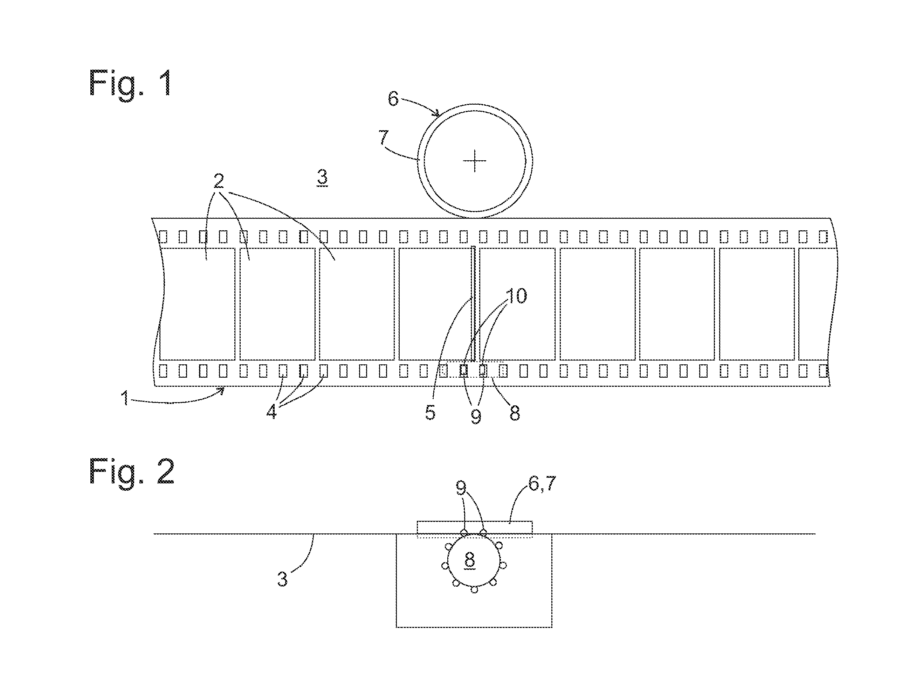

Fig. 1 is a schematic horizontal cross section of a film scanner, illustrating a piece of film 1 extending on a table 3 of the scanner. The plane of this table 3 is regarded as horizontal in the context of the present description, although a skilled person will appreciate that the orientation of the table might as well be different. The outlines of the table 3 are not shown in Fig. 1.

On the film 1 there is a series of images 2 to be scanned and four perforation holes 4 are punched into lateral regions of the film 1 at either side of each image 2. A scanning gate 5 comprising a row of photo sensors for scanning line by line the images 2 of film 1 can be located in the table below film 1 or in a scanning head, not shown, held above film 1. A pulley or roller 6 is mounted in the table 3 with an axis of rotation perpendicular to the table surface. The pulley 6 has an elastic circumferential surface formed e.g. of a rubber layer 7. As an alternative the axis of the pulley may be movably mounted so as to provide a force that urges the sprockets of the sprocket wheel against lateral facets of the sprocket holes in which they engage. A sprocket wheel 8 is mounted underneath the surface of table 3, as shown in Fig. 2, with an axis of rotation parallel to the table surface and perpendicular to the transport direction of film 1. At any time, two sprockets 9 of sprocket wheel 8 extend above the table surface and engage perforation holes 4, one at an upstream side of scanning gate 5 and the other at a downstream side thereof.

When the scanner is in operation, the film 1 is continuously pulled across scanning gate 5 by a capstan drive, not shown. Pulley 6 urges the film 1 towards the sprockets 9 of sprocket wheel 8, so that lateral facets 10 of the sprockets 9 which face the pulley 6 are always in contact with facing edges of the rectangular perforation holes 4 they engage. The sprockets 9 thus form a transversal abutment which limits a transversal displacement of the film 1 under the pressure of pulley 6.

The sprocket wheel 8 has no drive motor of its own associated to it, but is rotated by the traction exercised on it by the film 1. As long as a sprocket 9 engages a perforation hole 4 of film 1 there is practically no displacement of the sprocket with respect to the film in the transport (or longitudinal) and transversal directions of the latter. This is why the sprocket, unlike a stationary abutment in contact with an edge of the film, causes practically no transversal jitter of the film 1. Since there is practically no friction between the sprockets 9 and the film 1 in the transport direction of the latter, fluctuations of the film tension are small, and longitudinal vibrations of the film 1 are not likely to arise. Therefore, the images 2 move along scanning gate 5 very smoothly and regularly, and watering is reduced noticeably.

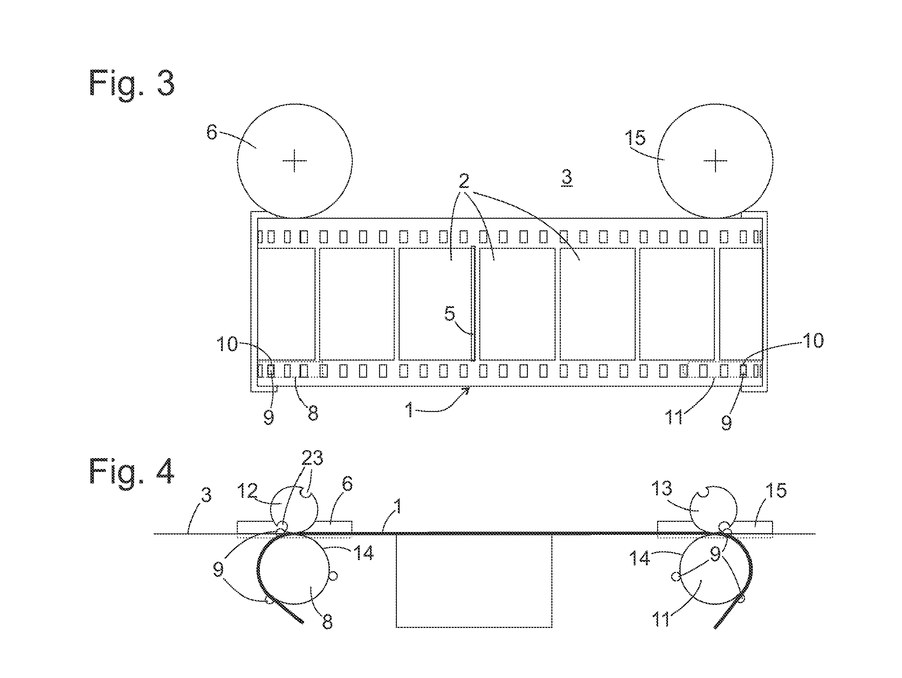

Fig. 3 is a horizontal cross section analogous to that of Fig. 1 of a second embodiment of the scanner, and Fig. 4 is a cross section of it. According to this embodiment there are two sprocket wheels 8, 11 mounted in the scanning table 3, one at an upstream side of scanning gate 5 and the other at a downstream side thereof. Here too, the film 1 is pulled across the scanning gate 5 by a capstan, not shown, and the sprocket wheels 8, 11 are retarded with respect to the capstan drive, the upstream sprocket wheel 8 a little bit more than the downstream wheel 11, in order to maintain the film 1 and a slight longitudinal tension when passing the scanning gate 5.

All sprockets 9 have the same dimensions and are slightly tapered towards their tips in order to facilitate engagement in the perforation holes 4 of film 1. Above the surface of table 3, two pressing rollers 12, 13 are rotatably mounted, one above each sprocket wheel 8, 11, which press the film 1 against a cylindrical circumferential surface 14 of the sprocket wheels 8, 11 from which the sprockets 9 protrude. The pressing rollers 12, 13 have cavities 23 formed in their circumferential surfaces which are adapted to receive the sprockets 9. The rollers 12, 13 thus ensure that all sprockets 9 engage the perforation holes 4 to the same extent, so that in spite of the tapering of the sprockets film 1 is always precisely aligned.

Similar to the embodiment of Fig. 1 and 2, the sprocket wheels 8, 11 of the second embodiment might have a sprocket for each perforation hole 4 of the film 1. According to a preferred modification, however, and as shown in Fig. 3, 4, the sprockets are spaced on sprocket wheels 8, 11 so as to engage only one of every four perforation holes of film 1. In other words, the spacing of the sprockets 9 on the circumferential surface 14 of sprocket wheels 8, 11 is the same as the spacing of images 2 of film 1. When placing a film in the scanner according to this embodiment, care should be taken to have the sprockets 9 engage those of the perforation holes 4 which also served as a reference to the camera when the film 1 was exposed. In this way, a very tight relationship is obtained between the angular orientation of the sprocket wheels 8, 11 and the position of the images 2 with respect to the scanning gate 5. In other words, an extremely precise trigger signal indicative of an image 2 beginning to pass across scanning gate 5 can be derived from the rotation of the sprocket wheels 8, 11.

Such a trigger signal can be used directly for triggering an image scanning process at scanning gate 5, or it can be used as an input to a phase-locked loop, which controls the operation of the scanning gate 5.

Each sprocket wheel 8, 11 has a pulley 6, 15 associated to it for urging the edges of perforation hole 4 of film 1 against the lateral facets 10 of the sprockets 9.

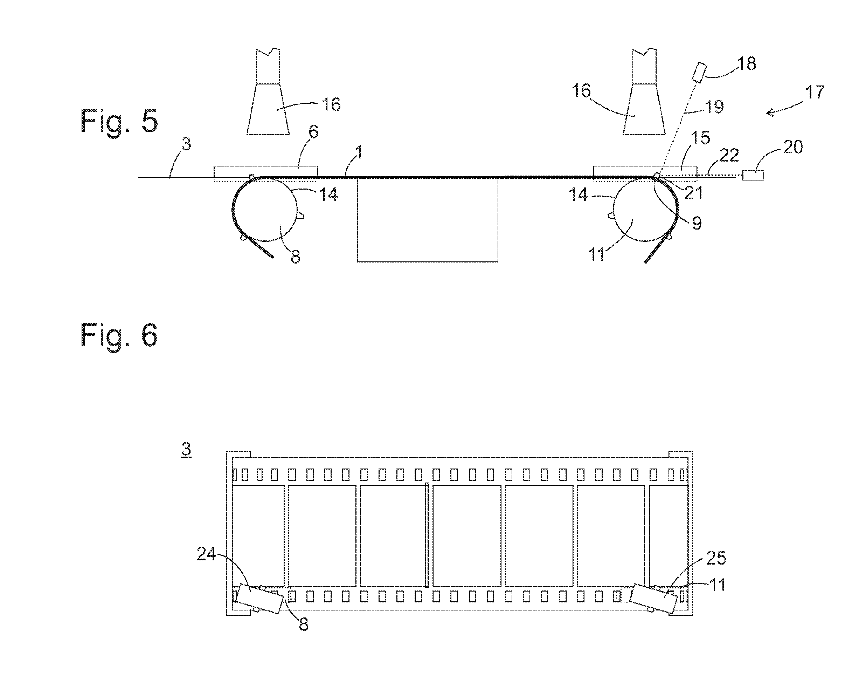

Fig. 5 is a cross section analogous to that of Fig. 4 of the scanner according to a third embodiment. A plan view of the scanner according to this third embodiment is similar to Fig. 3, since the two embodiments differ only in components mounted above the scanning table surface. Incidentally, the pressing rollers 12, 13 of Fig. 4 are replaced in Fig. 5 by nozzles 16 which direct a jet of pressurized air against the film 1 in order to press it against the circumferential surface 14 of sprocket wheels 8, 11. The effect of the nozzles 16 is the same as that of the pressing rollers 12, 13.

Fig. 5 illustrates a further detail which is applicable likewise to the first and second embodiments, namely a trigger detector 17 for deriving a trigger signal for scanning gate 5. The trigger detector 17 comprises a semiconductor laser 18 which directs a narrow beam 18 against downstream sprocket wheel 11, and a photo detector 20. As long as the beam 18 impinges on a portion of the film 1 between two perforation holes 4, it is reflected in a direction away from photo detector 20. In the arrangement shown in Fig. 5, the beam 18 propagates towards the axis of sprocket wheel 11, so that it is reflected back towards the laser 18. If the beam 18 hits a perforation hole 4 with no sprocket 9 in it, it may be absorbed or reflected by the circumferential surface 14 of sprocket wheel 11. Only if the beam 19 hits a frontal facet 21 of a sprocket 9, a reflected beam 22 is formed which propagates in a direction substantially different from that of beam 19. The reflected beam 22 rotates along with the sprocket wheel 11, so that only during an extremely short instant it is received by photo-detector 20. The photo-detector 20 thus yields an output signal which can be used as a highly precise trigger signal for triggering an image scan at scanning gate 5 or for correcting a PLL or any other kind of circuitry which generates such a trigger signal.

Fig. 6 is a scanner according to a fourth embodiment of the invention. Similar to the embodiment of Fig. 4, this embodiment has pressing rollers 24, 25 for pressing the film 1 against the circumferential surfaces 14 of sprocket wheels 8, 11. The rotation axes of each sprocket wheel 8, 11 and its associated pressing roller 24, 25 are parallel to the surface of table 3, but while the axes of the plane of sprocket wheels 8, 11 are perpendicular to the direction of transport of the film 1, the axes of the pressing rollers 24, 25 are not. Due to this deliberate misalignment, the pressing rollers 24, 25 are effective not only to urge the film 1 downward, against the table 3 and the sprocket wheels 8, 11, but also in the transversal direction, so that the pulleys of the previous embodiments can be dispensed with.

## Claims

1. A film scanner comprising a film support (3), driving means for moving a film (1) across said support (3) in a longitudinal direction, a photo-sensitive gate (5) for scanning images (2) of said film (1) placed on said support (3), a lateral abutment (9) and urging means (6, 15; 24, 25) for urging the film (1) against said abutment (9) in a transversal direction, **characterized in that** the abutment is formed by sprockets (9) of at least one sprocket wheel (8, 11) engaging in perforation holes (4) of the film (1).

2. The film scanner of claim 1, wherein the sprockets (9) protrude from a circumferential surface (14) of the sprocket wheel (8, 11), further comprising pressing means (12, 13; 16; 24, 25) for pressing the film (1) against said circumferential surface (14).

3. The film scanner of claim 2, wherein the pressing means comprises a nozzle (16) for directing a gas jet onto the film (1).

4. The film scanner of claim 2, wherein the pressing means comprises a pressing roller (12, 13; 24, 25) having a circumferential surface which faces the circumferential surface (14) of the sprocket wheel (8, 11).

5. The film scanner of any of the preceding claims, wherein sprockets (9) of a same sprocket wheel (8) engage in the film (1) simultaneously at an upstream side and a downstream side of the gate (5).

6. The film scanner of any of claims 1 to 4, wherein two of said sprocket wheels (8) are provided, one being placed at an upstream side of the gate (5) and another (11) being placed at a downstream side of the gate (5).

7. The film scanner of any of the preceding claims, wherein the distance between sprockets (9) on said sprocket wheel (8, 11) is the same as the distance between images (2) on the film (1).

8. The film scanner of any of the preceding claims, wherein the sprocket wheel (8, 11) has a circumferential surface (14) and a span of said circumferential surface (14) in contact with the film (1) is at least as long as one image (2) of the film (1).

9. The film scanner of any of the preceding claims, wherein the means for urging comprise a pulley (6, 15) pressing against an edge of the film.

10. The film scanner of any of the preceding claims, wherein the means for urging comprise a roller (24, 25) which is rotatable around an axis, which is parallel to the plane of the support (3) and oblique to the direction of transport of the film (1).

11. The film scanner of any of the preceding claims, further comprising means for synchronizing the scanning operation of the gate (5) with the rotation of said sprocket wheel (8, 11).

12. The film scanner of claim 11, wherein the means for synchronizing comprise a sensor (17) for detecting the presence of a sprocket (9) at a given location.

13. The film scanner of claim 12, wherein the sensor (17) comprises a beam source (18) and a detector (20) for detecting a fraction (22) of the beam (19) scattered or reflected by the sprocket (9) at said given location.
